(19) Europäisches Patentamt
European Patent Office
Office européen des brevets

(11) Veröffentlichungsnummer: **0 562 231 A2**

# (12) EUROPÄISCHE PATENTANMELDUNG

(21) Anmeldenummer: **93100976.5**

(22) Anmeldetag: **22.01.93**

(51) Int. Cl.5: **C08G 59/14**, C08G 59/02, C08G 59/30, C08G 75/14, C08L 63/02, C08G 81/00

(30) Priorität: **25.03.92 DE 4209553**

(43) Veröffentlichungstag der Anmeldung: **29.09.93 Patentblatt 93/39**

(84) Benannte Vertragsstaaten: **AT BE CH DE DK ES FR GB GR IT LI LU NL PT SE**

(71) Anmelder: **RÜTGERSWERKE AKTIENGESELLSCHAFT**
**Mainzer Landstrasse 217**
**D-60326 Frankfurt(DE)**

(72) Erfinder: **Grundke, Ulrich**
**Bronkhorststrasse 52**
**W-4100 Duisburg 12(DE)**
Erfinder: **Mathes, Alfred, Dr.**
**Königsberger Strasse 55**
**W-4134 Rheinberg 1(DE)**
Erfinder: **Meier, Bert, Dr.**
**Christine-Koch-Strasse 11**
**W-5750 Menden(DE)**
Erfinder: **Zehrfeld, Jürgen, Dr.**
**Elisabethstrasse 32**
**W-4223 Voerde(DE)**

## (54) Ester, Verfahren zu ihrer Herstellung und Verwendung.

(57) Die Erfindung betrifft Ester epoxidierter Polysulfid-Oligomere oder -Polymere der allgemeinen Formeln

(I)

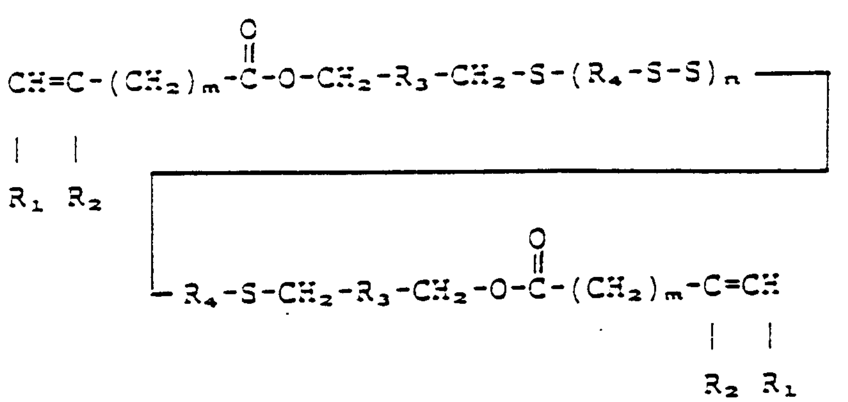

oder

EP 0 562 231 A2

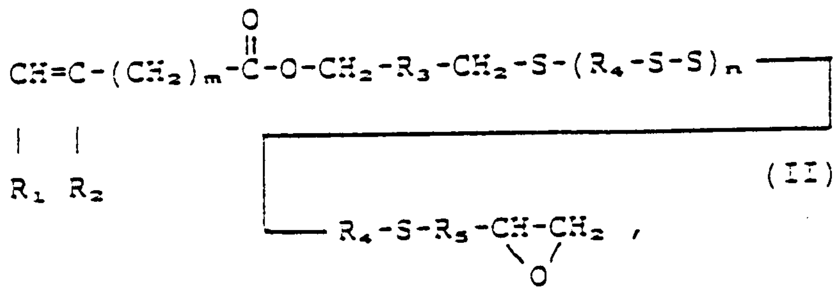

(II)

und ihre Verwendung zur Flexibilisierung von Epoxidharzen und ungesättigten Harzen, insbesondere bei der Herstellung flexibler Beschichtungen.

Die Erfindung betrifft intern flexibilisierte Ester und ihre Verwendung in härtbaren Mischungen. Diese finden bevorzugt Verwendung zur Herstellung flexibilisierter Stoffe mit gleichzeitig hoher Chemikalienbeständigkeit und Schlagzähigkeit.

Chemikalienbeständige und gleichzeitig flexible Bindemittel für Anstriche, Verklebungen und Beschichtungen werden heute verstärkt zur Lösung technischer Aufgaben benötigt. Beispielsweise werden zum Schutz der Umwelt vor Einwirkungen von wassergefährdenden Stoffen aufwendige Abdichtungen in Bereichen, wo wassergefährdende Stoffe produziert, gehandhabt und gelagert werden, vorgenommen. An die Beschichtungen werden zwei Grudanforderungen gestellt: Sie müssen gegen die auftretenden Chemikalien beständig sein und baulich bedingte Risse überbrücken. Die heute zugelassenen Beschichtungen mit reaktiven Kunststoffen für Auffangwannen nach dem Wasserhaushaltsgesetz weisen einen mehrschichtigen Aufbau auf. Eine flexible Schicht sichert die Überbrückung ab, eine zweite Schicht ist beständig gegen die gelagerten Chemikalien. Die flexible Unterschicht besitzt üblicherweise eine nicht ausreichende Chemikalienbeständigkeit, während die obere Deckschicht nicht ausreichende rissüberbrückende Eigenschaften aufweist. Dadurch wird der mehrschichtige Aufbau unumgänglich und es resultieren folgende Nachteile:
Die Beschichtung ist aufwendig in der Verlegung. Die Materialkosten der Beschichtungen sind hoch. Die Beschichtung erfüllt ihre abdichtende Funktion nur bei intakter chemikalienbeständiger Deckschicht. Der Belagsaufbau ist mechanisch gering belastbar wegen der flexiblen Unterschicht.

Es sind Versuche bekannt, die hohen mechanischen und chemischen Beständigkeiten von Epoxidharzen oder Vinylester-Harzen durch Abmischung mit reaktiven flexibilisierenden Stoffen zu modifizieren, um flexibilisierte und beständige Bindemittel in einem zu erhalten. Die Bindemittel weisen allerdings in der Verarbeitung, bei der Aushärtung oder bei der Chemikalienbeständigkeit Nachteile auf, die den Einsatz in der Praxis einschränken. So weisen zum Beispiel die mit flüssigen Polysulfidpoymeren (Thiokol LP® -3) modifizierten Epoxid-Harz-Bindemittel bei einer ausreichenden Rißüberbrückung (Dehnung von 110 bis 140 %) nur eine teilweise Beständigkeit gegen übliche Medien auf.

Diese Beschichtungen sind z. B. gegen aromatische Kohlenwasserstoffe, Ester, Ketone, chlorierte Kohlenwasserstoffe nicht ausreichend beständig. Weitere Nachteile sind der unangenehme Geruch des Flexibilisators. Geruchsneutralere Polysulfid-Epoxidharz-Copolymere sind für Applikationen bei Raumtemperatur zu hochviskos. Dadurch wird der Anteil des hochviskosen Copolymers mit Epoxidharz-Mischungen beschränkt, und die Rißüberbrückung ist nicht ausreichend.

Die gleichen Einschränkungen hinsichtlich der Beständigkeit treffen auch auf direkt epoxidierte Polysulfidpolymere (EP-A-0 347 131) zu. Nachteilig wirken sich hier die geringe Reaktivität und die teilweise Unverträglichkeit mit polaren, chemikalienbeständigen Kalthärtern für Epoxidharze aus. Dadurch tritt eine verstärkte Phasenseparation der reaktiven Polysulfidpolymere auf, die wegen Mikrosegregation nicht mit ins Netzwerk eingebaut werden. Dadurch sinkt die Reißdehnung und Zugfestigkeit; die Weitreißfestigkeit und die Quellbarkeit mit aromatischen Kohlenwasserstoffen/chlorierten Kohlenwasserstoffen, Estern und Ketonen steigt.

Mit flexibilisierten Vinylester-Harzen, wie sie aus US-A-4 962 163 bekannt sind, werden die geforderten Chemikalienbeständigkeiten und flexiblen Eigenschaften nicht erreicht. Wegen der hohen Viskosität der Kautschukprodukte und der daraus resultierenden Vinylester ist eine Zugabe über 20 %, bei gleichzeitiger notwendiger Verdünnung mit ca. 40 % Styrol nicht praktikabel. Daraus ergeben sich Dehnungen von ca. 20 %, die für die geforderte Rißüberbrückung unzureichend ist. Die Beständigkeit ist trotz der geringen Kautschukanteile bereits nicht ausreichend gegen chlorierte Kohlenwasserstoffe, Ester, Ketone und Alkohole.

Es ist daher Aufgabe der Erfindung, intern wirkende Flexibilisierungsmittel bereitzustellen, die ein stark verbessertes Eigenschaftsprofil besitzen, die insbesondere eine hohe Chemikalienbeständigkeit und eine hohe Dehnung aufweisen.

Die Lösung der Aufgabe erfolgt durch Ester gemäß Anspruch 1 durch Verfahren zu ihrer Herstellung gemäß der Ansprüche 2 und 3 und ihre Verwendung zur Flexibilisierung von Epoxidharzen sowie zur Herstellung alleine oder im Gemisch mit Epoxidharzen und/oder epoxidgruppenhaltigen Reaktivverdünnern von flexiblen Beschichtungen gemäß der Ansprüche 4 und 5. Erfindungsgemäße Verwendung der Ester ist auch der Einsatz als Flexibilisierungsmittel für ethylenisch ungesättigte Harze, insbesondere Acrylat- oder ungesättigte Polyesterharze sowie zur Herstellung flexibler Beschichtungen als alleiniges Bindemitttel sowie im Gemisch mit diesen Harzen gemäß der Ansprüche 6 und 7 sowie die Verwendung als Flexibilisierungsmittel für durch Strahlung vernetzbare Beschichtungsmittel.

Während die epoxidierten Polysulfidpolymere das gewünschte Eigenschaftsprofil nicht zeigen, tritt überraschenderweise eine mannigfaltige Eigenschaftsverbesserung auf, wenn diese Produkte mit ungesättigten Carbonsäuren verestert werden. Die dabei entstehenden Ester epoxidierter Polysulfid-Oligomere oder -Polymere besitzen eine hohe Chemikalienbeständigkeit, eine hohe Zugfestig- und Weiterreißfestigkeit, eine

niedrige Viskosität bei gleichzeitig hoher Reaktivität, gepaart mit guten Haftungseigenschaften und guter Verträglichkeit mit anderen Polymeren, insbesondere mit Epoxidharzen und mit aminischen Härtern.

Die erfindungsgemäßen Ester entsprechen in ihrem Aufbau den folgenden allgemeinen Formeln I oder II:

(I)

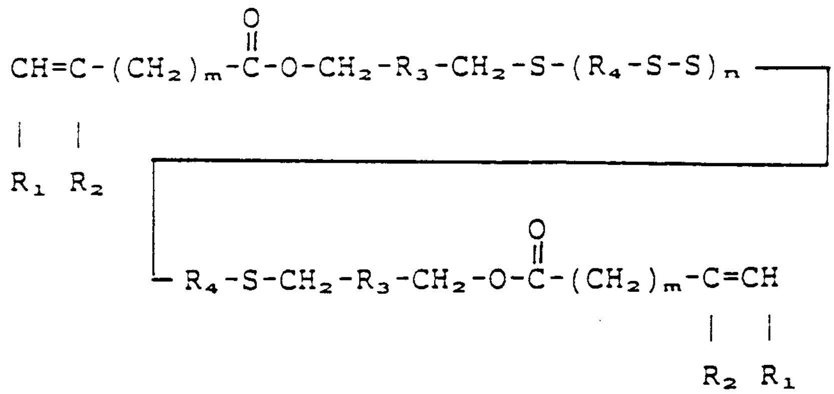

oder

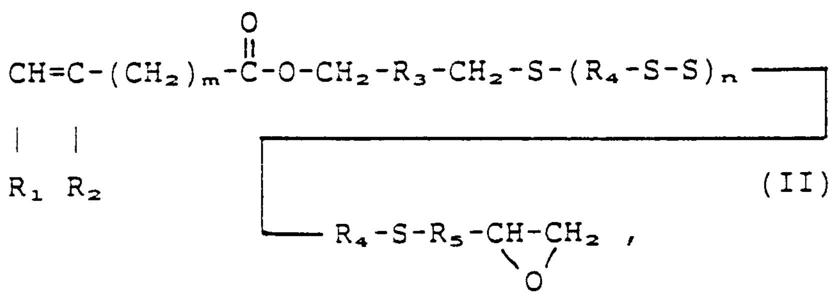

(II)

in denen

m = 0 oder 1

n = 3 bis 25

$R_1$ ein Furyl- oder Phenylrest oder Wasserstoff,

$R_2$ Wasserstoff oder eine Methylgruppe,

$R_3$ eine Gruppe gemäß der Formeln,

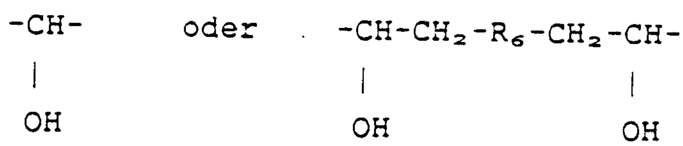

$R_4$ eine Gruppe gemäß der Formel

$-C_2H_4-O-CH_2-O-C_2H_4-$

$R_5$ eine Gruppe gemäß der Formeln

$-CH_2-$

oder

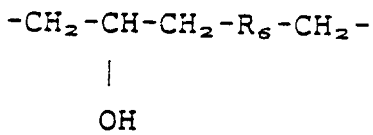

$R_6$ eine Gruppe gemäß der Formeln

$-O-(CH_2)_{2-12}-O-$ ,

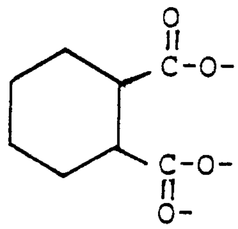

,

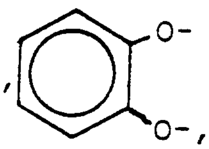

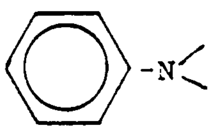

, $-O-(R_8-O-R_9-O)_o-R_8-O-$

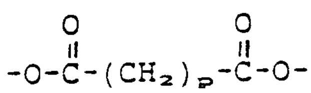

oder

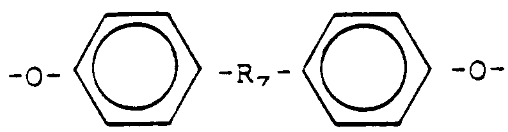

$R_7$ - $CH_2$- ,

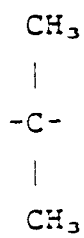

,

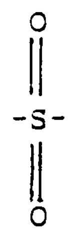

oder

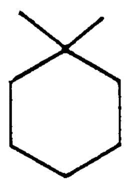

o = 1 bis 20
p = 1 bis 10

und $R_8$ und $R_9$ gleich oder verschieden sind und eine Ethylen- oder Propylen-Gruppe bedeuten.

Der Aufbau der erfindungsgemäßen ungesättigten Ester läßt sich in einfacher Weise an Hand der wesentlichen Schritte zu ihrer Herstellung und der dabei eingesetzten Bausteine erläutern: Ausgangsbausteine sind handelsübliche, flüssige Polysulfid-Oligomere oder -Polymere der allgemeinen Formel

$HS-(C_2H_4-O-CH_2-O-C_2H_4-S-S)_n-C_2H_4-O-CH_2-O-C_2H_4-SH$,

wobei n im Bereich von 3 bis 25 liegt. Die eingesetzten Produkte sind hinsichtlich ihrer Molekülgröße nicht

einheitlich, vielmehr ist die Größe n als statistisches Mittel zu sehen. Die handelsüblichen Produkte sind zu 0,1 bis 2 % trifunktionell. Diese Trifunktionalität bleibt auch bei den weiteren Umsetzungen erhalten, wirkt sich aber im Endprodukt nicht merkbar aus. Sie wird in der angegebenen allgemeinen Formel nicht berücksichtigt.

Polysulfid-Oligomere oder -Polymere werden in an sich bekannter Weise durch Zusammenrühren der flüssigen oder in Lösung vorliegenden Reaktanden, gegebenenfalls unter Zugabe eines katalytisch wirkenden Amins, und mehrstündiges Erwärmen auf Temperaturen im Bereich von 40 bis 80 °C mit epoxidgruppenhaltigen, difunktionellen Verbindungen umgesetzt. Entsprechende Verbindungen sind entweder Epihalogenhydrine, bevorzugt Epichlorhydrin oder difunktionelle Epoxidverbindungen. Als solche können im Prinzip alle difunktionellen Epoxidverbindungen eingesetzt werden. Bevorzugte Epoxidverbindungen sind aliphatische oder aromatische Gycidylether oder Ester, wie z. B. Resorcindiglycidylether, Diglycidylanilin, Diglycidylether der Bisphenole, insbesondere von Bisphenol A oder F, aliphatischer Diole mit einer Kettenlänge von 2 bis 12 C-Atomen, Polyalkylenglykoldiglycidylether oder Diglycidylester z.B. der Hexahydrophthalsäure oder von aliphatischen Dicarbonsäuren mit 3 bis 13 C-Atomen.

Zur Herstellung reiner epoxidierter Polysulfid-Oligomere oder -Polymere werden bei der Reaktion mit difunktionellen Epoxidverbindungen die Epoxidgruppen zu den Merkaptogruppen im doppelten stöchiometrischen Verhältnis miteinander zugesetzt.

In der betrieblichen Praxis wird jedoch häufig ein Überschuß an Epoxidverbindungen gewählt, da dies in relativ kurzer Reaktionszeit eine vollständige Umsetzung der Merkaptogruppen gewährleistet. Dabei kann der Überschuß der Epoxidgruppen bis zu dem 10-fachen des den Merkaptogruppen entsprechenden stöchiometrischen Verhältnisses betragen. Nach der Umsetzung liegt dann ein Gemisch aus Epoxidverbindungen und epoxidierten Polysulfid-Oligomeren und -Polymeren vor, das ohne weitere Aufarbeitung der weitern Reaktion, der Veresterung mit einer ethylenisch ungesättigten Carbonsäure zugeführt wird. Dabei wird dann die allen Epoxidgruppen äquivalente Menge an ungesättigter Carbonsäure eingesetzt, so daß als Reaktionsprodukt ein Gemisch aus an sich bekannten Estern von Epoxidverbindungen und den erfindungsgemäßen Estern erhalten wird. Auch derartige Gemische erfüllen die erfindungsgemäßen Aufgaben.

Bei der Umsetzung der Polysulfid-Oligomere oder -Polymere mit Epihalogenhydrin wird die den Merkaptogruppen äquivalente Menge an Epihalogenhydrin eingesetzt. Entsprechende Produkte sind unter dem Warenzeichen ELP® (Morton) im Handel erhältlich. Bei der Umsetzung der Polysulfid-Oligomere oder -Polymere mit difunktionellen Epoxidverbindungen werden die Mengenverhältnisse so gewählt, daß pro Merkaptogruppe zwei Epoxidgruppen eingesetzt werden.

Die im ersten Reaktionschritt erhaltenen epoxidierten Polysulfide werden ohne weitere Aufarbeitung mit einer ethylenischen ungesättigten Carbonsäure umgesetzt. Auch diese Umsetzung erfolgt in an sich bekannter Weise durch Zusammenrühren der flüssigen oder in Lösung vorliegenden Reaktanden und Erwärmen des Reaktionsgemisches auf eine Temperatur im Bereich von 60 bis 90 °C für mehrere Stunden. Im allgemeinen wird die Reaktion beendet, wenn eine Säurezahl von weniger als 5 erreicht ist. Zur Herstellung der Ester gemäß der allgemeinen Formel I werden die epoxidierten Polysulfide mit einer dem Epoxidäquivalent entsprechenden Menge an ethylenisch ungesättigter Säure umgesetzt. Zur Herstellung der Ester gemäß der allgemeinen Formel II werden die epoxidierten Polysulfide mit einer dem halben Epoxidäquivalent entsprechenden Menge an ethylenisch ungesättigter Säure umgesetzt. Beispiele für entsprechende ethylenisch ungesättigte Säuren sind die Acryl-, Metharcyl-, Furylacryl-, Croton- und Zimtsäure.

Die Ester gemäß der Formeln I und II sind honigfarbene Produkte, deren Viskosität geringer ist als die der entsprechenden epoxidierten Polysulfide. Zur weiteren Reduzierung der Viskosität können sie in Lösungsmittel oder bevorzugt in ethylenisch ungesättigten Monomeren gelöst werden. Andererseits ist aber die Möglichkeit der lösungsmittelfreien Anwendung (sog. high-solid-Anwendung) als Vorteil der erfindungsgemäßen Ester zu sehen. Überraschenderweise lassen sich die erfindungsgemäßen Ester mittels zweier unterschiedlicher Mechanismen polymerisieren:

Auf Grund ihrer ungesättigten Gruppen lassen sie sich radikalisch härten und dementsprechend auch mit anderen radikalisch härtbaren Monomeren, Oligomeren oder Polymeren kombinieren und über einen radikalischen Mechanismus zu Copolymeren polymerisieren.

Als entsprechende Reaktivverdünner können alle radikalisch polymerisierbaren niedrigviskosen Stoffen Verwendung finden. Besonders geeignet sind Styrol und Trimethylolpropantriacrylat. Die Estermischung wird radikalisch gehärtet. Beispiele für thermisch startende Radikalbildner sind organische Peroxide in Kombination mit aromatischen Aminen und Kobaltsalzen oder den jeweils aus dem Stand der Technik bekannten lichtinduzierten Radikalbildnern auf der Basis von Phosphinoxyden, Thioxanthon, Michlers Keton oder Ketalen. Zur Verminderung der Sauerstoffinhibierung an der Oberfläche können bekannte Wachse Verwendung finden.

Durch Kombination der erfindungsgemäßen Ester mit Acrylat- oder ungesättigten Polyesterharzen lassen sich monomerfreie, flüssig verarbeitbare Mischungen herstellen, die radikalisch zu flexiblen Endprodukten gehärtet werden können und die vielfache Anwendungsmöglichkeiten als Klebe-, Dichtungs- und Beschichtungsmassen haben. Insbesondere Beschichtungsmassen auf Basis von ungesättigten Acrylat- oder Polyester-Harzen erhalten durch Zusatz von bis zu 30 Gew.-%, bezogen auf den Gesamt-Bindemittelanteil eine wesentliche Verbesserung hinsichtlich ihrer Flexibilität, ihrer Chemikalienbeständigkeit und ihres Haftvermögens auf den verschiedensten Untergründen.

Ein weiteres bevorzugts Anwendungsgebiet ist die Kombination von bis zu 70 Gew.-%, bezogen auf die jeweiligen Gesamtbindemittel, der erfindungsgemäßen Ester mit durch Strahlung vernetzbaren Beschichtungsmitteln, insbesondere solchen, wie sie z. B. aus EP-A-0 194 360, EP-A-0 099 856,
DE-A-25 33 125, DE-A-37 04 149 oder
DE-A-41 16 957
bekannt sind, zur Herstellung flexibler, strahungshärtender Beschichtungen.

Alleine und im Gemisch mit Epoxidharzen und/oder epoxidgruppenhaltigen Reaktivverdünnern lassen sich die erfindungsgemäßen Ester mit den für die Epoxidharzhärtung bekannten und üblicherweise verwendeten aminischen Härtern härten, wobei die Aushärtung auch bei Raumtemperatur erfolgen kann. Auch in diesen Mischungen können die Reaktivität und die Endeigenschaften durch weitere Zusätze wie Beschleuniger oder Modifizierungsmittel gezielt eingestellt werden. Bevorzugte Härter sind einerseits die aus der Literatur bekannten flexiblen Härter sowie Amin-Addukte aus epoxidierten Polysulfiden. Beispiele für entsprechende Beschleuniger sind tertiäre Amine, Amoniumverbindungen, Phosphine,
Phosphoniumverbindungen,
organische Säuren, Phenole, Alkohole oder Imidazole.

Durch Abmischen von 10 bis 90 Gew.-% der Ester, bezogen auf die gesamte Bindemittelmenge, mit Epoxidharzen oder epoxidgruppenhaltigen Reaktivverdünnern entstehen lagerstabile Mischungen mit geringer Viskosität.

In der reaktiven Harz/Härter-Mischung reagieren die Ester rasch mit dem aminischen Härter. Dadurch wird die Mischbarkeit der Ester in der reaktiven Masse erhöht, und es findet im zweiten Schritt bei der Amin/Epoxid-Härtungsreaktion der volle Einbau des Esters ins Netzwerk statt. Die ausgehärtete Masse weist eine hohe Chemikalienbeständigkeit bei gleichzeitigen vorteilhaften mechanischen Werten auf. Insbesondere verbessert ist die Flexibilität dieser gehärteten Masse. Somit eignen sich die erfindungsgemäßen Ester als Flexibilisierungsmittel für epoxidgruppenhaltige Harz-Härter-Mischungen und als solche zur Herstellung entsprechender Klebe-, Dichtungs- und insbesondere Beschichtungsmassen.

## BEISPIELE

Erläuterungen der Abkürzungen und der eingesetzten Stoffe:

| | |
|---|---|
| **AS** | Acrylsäure |
| **BDMA** | Benzyldimethylamin |
| **Beschleuniger CA12** | Cobalt/Amin-Flüssiggemisch in Phthalat |
| **BTMAC** | Benzyltrimethylammoniumchlorid |
| **ELP® -3** | Epoxidiertes Polysulfid (LP® -3),<br>Epoxidzahl 3,35 %,<br>Viskosität 4000 mPa•s (25 °C) |
| **EZ** | Epoxidzahl |
| **Interrox® TBPB-HA-M1** | tert-Butyl-peroxybenzoat |
| **LP® -3** | Polysulfid-Oligomer mit<br><br>Mercaptanendgruppen,<br>Molmasse 1000,<br>Mercaptangehalt 5,9 bis 7,7 %,<br>Viskosität ca. 1200 mPa•s (25 °C) |
| **LP® -2** | Polysulfid-Polymer mit<br>Mercaptanendgruppen,<br>Molmasse 4000,<br>Mercaptangehalt 1,5 bis 2,0 %<br>Viskosität 47 000 mPa•s (25 °C) |
| **Lucirin® BDK** | 2,2-Dimethoxy-2-phenylacetophenon |
| **MAS** | Methacrylsäure |

| | |
|---|---|
| **PM** | Propylenglykolmonomethylether |
| **TPP** | Triphenylphosphin |

| Epoxidverbindung | Typ | Viskosität (25 °C) [mPa•s] | Epoxid-Äquivalent [g/Äqui] |
|---|---|---|---|
| Rütapox® 0161 | Bisphenol F-Harz | 4 500 | 172 |
| Rütapox® 0162 | Bisphenol A-Harz | 4 500 | 174 |
| Rütapox® 0164 | Bisphenol A-Harz | 10 000 | 188 |
| Rütapox® 0158 | Bisphenol F-Harz | 1 200 | 163 |
| Rütapox® 0166 | Bisphenol A/Bisphenol F-Harz | 8 000 | 188 |
| Rütapox® Verdünner S | Hexandiglycidylether | 25 | 160 |
| Rütapox® Verdünner R | Resorcindiglycidylether | 260 | 121 |
| Rütapox® VE 3650 | Diglycidylanilin | 150 | 115 |
| Rütapox® Verdünner B | Butylglycidylether | 5 | 138 |
| Rütapox® Flexibilisator WF | Polyalkylenoxiddiglycidylether | 500 | 416 |

| **AMINISCHE HÄRTER** | | | |
|---|---|---|---|
| Härter | | Viskosität (25 °C) [mPa•s] | Äquivalent [g/Äqui] |
| TMD | 2,4,4-Trimethyl-hexamethylen-Diamin | 4 | 40 |
| SX | m-Xylylen-Diamin | 3 | 34 |
| MPDA | 2-Methyl-1,5-diamino-Pentan | 3 | 29 |
| H105B | Phenol-Mannichbase mit SX | 2 500 | 92 |
| MDA | Methylendianilin | fest | 50 |
| Härter N | N-Amino-Ethyl-Piperazin | 15 | 43 |
| Härter C | 2-Butyl-2-ethylpentan-1,5-diamin | 4 | 47 |
| Texaco-EDR-148 | Triethylenglycoldiamin | 3 | 15 |

Beispiel 1

Zu 1393 g Rütapox® 0164 und 2 g Benzyldimethylamin werden unter Rühren und Schutzatmosphäre 1000 g Polysulfid LP® -3 bei 60 bis 80 °C innerhalb von 2 Stunden zugetropft. Die Nachreaktion beträgt weitere 3 Stunden bei 80 °C. Das Produkt ist eine klare Flüssigkeit mit einer Epoxidzahl von 10,6 und einer Viskosität von ca. 83 000 mPa•s bei 25 °C. Die Ausbeute beträgt 100 %. Die Zusammenfassung der Daten finden sich unter Punkt 1 in Tabelle 1.

Beispiele 2 bis 7

Analog zu Beispiel 1 werden verschiedene epoxidierte Polysulfide hergestellt. Die weiteren Angaben und auch die Variationen zu Beispiel 1 finden sich in Tabelle 1, Punkt 2 bis 7 und 8 bis 11

TABELLE 1

| Bsp. | Epoxid-verbindung | Menge [g] | Poly-sulfid | Menge [g] | Kataly-sator | Menge [g] | EZ [%] | Viskosität (25 °C) [mPa·s] |
|---|---|---|---|---|---|---|---|---|
| 1 | Rütapox® 0164 | 1393 | LP® -3 | 1000 | BDMA | 2 | 10,6 | 83 000 |
| 2 | Rütapox® 0161 | 1038 | LP® -3 | 1000 | BDMA | 2 | 8,6 | 66 500 |
| 3 | Rütapox® Verdünner R | 595,5 | LP® -3 | 1000 | BDMA | 2 | 8,57 | 27 000 |
| 4 | Rütapox® VE 3650 | 690 | LP® -3 | 1000 | BTMAC | 2 | 8,83 | 50 000 |
| 5 | Rütapox® Verdünner S | 655 | LP® -3 | 1000 | TPP | 1,5 | 8,10 | 12 000 |
| 6 | Rütapox® 0158 + Rütapox® Verdünner B | 972<br>139 | LP® -2 | 4000 | BTMAC | 2,5 | 5,04 | 22 000 |
| 7 | Rütapox® Flexibili-sator WF | 2080 | LP® -2 | 4000 | BDMA | 2,5 | 2,80 | 15 000 |

| Bsp. | Rütapox-Harz/ Menge | Polysulfid/ jew. 1 000 g | Katalysator/ jew. 0,4 g | Lösemittel/ Menge | Epoxidzahl [%] | Viskosität [25 °C] |
|---|---|---|---|---|---|---|
| 8 | 0161/676 g | LP-3 | BDMA | Xylol/560 g | 4,0 | 1 000 |
| 9 | Verd. R/478 g | LP-3 | BDMA | ----------- | 6,5 | 55 000 |
| 10 | 0161/688 g | LP-3 | BDMA | PM/1 688,4 g | 2,5 | 125 |
| 11 | Verd. R/478 g | LP-3 | BDMA | PM/1 478,4 g | 2,8 | 75 |

Beispiel 12

In einem 2 l-Dreihalskolben, ausgerüstet mit Thermometer, Flügelrührer, Rückflußkühler und Tropftrichter, werden 406 g epoxidiertes Polysulfid (entsprechend Bespiel 1) vorgelegt und auf 80 °C erhitzt. In Gegenwart von 1,5 g BDMA wird bei 80 °C 73,44 g Acrylsäure in 1 bis 2 Stunden zugetropft. Nach 18 bis 20 Stunden Nachreaktion bei 80 °C wurde mit 206 g Styrol verdünnt und dann gekühlt. Der Ester hat einen Festgehalt von 70 %, eine Viskosität von 540 mPa•s (Höppler-Viskosimeter, bei 25 °C) und eine Säurezahl

von 3,6 mg KOH/g. Die Zusammenfassung der Daten findet sich in Tabelle 2 Punkt 12.

Beispiele 13 bis 31

Analog zu Beispiel 12 werden verschiedene Ester hergestellt. Die näheren Angaben hierzu finden sich in Tabelle 2, Punkte 13 bis 26 und Tabelle 2a, Punkte 27 bis 31.

## TABELLE 2

| | epoxidiertes Polysulfid aus Beisp. | [g] | ungesättigte Säure | [g] | Nachreaktion Temperatur [°C] | Zeit [h] | Ester Viskosität [mPa·s] | 70 %ig in Modifizierungsmittel |
|---|---|---|---|---|---|---|---|---|
| 12 | 1 | 406 | AS | 73,44 | 80 | 20 | 540 | Styrol |
| 13 | 1 | 406 | MAS | 87,72 | 80 | 18 | 360 | Styrol |
| 14 | 2 | 500 | AS | 73,44 | 80 | 18 | 750 | Styrol |
| 15 | 2 | 500 | MAS | 87,72 | 80 | 20 | 340 | Styrol |
| 16 | 3 | 502 | AS | 73,44 | 80 | 19 | 860 | Styrol |
| 17 | 3 | 502 | MAS | 87,72 | 80 | 18 | 590 | Styrol |
| 18 | 4 | 487 | MAS | 87,72 | 80 | 19 | 680 | Styrol |
| 19 | 5 | 331 | MAS | 87,72 | 80 | 20 | 120 | Styrol |
| 20 | 6 | 730 | AS | 73,44 | 80 | 20 | 340 | Styrol |
| 21 | 7 | 1215 | MAS | 87,72 | 80 | 18 | 140 | Styrol |
| 22 | 2 | 500 | AS | 73,44 | 80 | 19 | 2080 | Benzyl-alkohol |
| 23 | 3 | 502 | AS | 73,44 | 80 | 18 | 862 | Benzyl-alkohol |
| 24 | Rütapox® 0161<br>+<br>ELP-3 | 147<br><br>194 | AS | 73,44 | 80 | 20 | 480 | Styrol |
| 25 | Rütapox® 0161<br>+<br>ELP-3 | 147<br><br>194 | MAS | 87,72 | 80 | 19 | 160 | Styrol |
| 26 | 1 | 406 | AS | 73,44 | 80 | 20 | 1260 | Tripropylen-glykoldi-acrylat |

TABELLE 2a

| Bsp. | epoxidiertes Polysulfid aus Beispiel/Menge | | ungesättigte Säure/Menge | | Lösemittel/Menge | | Nachreaktion Temp./Zeit | | Ester Viskosität [mPa•s] | |
|---|---|---|---|---|---|---|---|---|---|---|
| 27 | 8 | 1 075,0 g | AS | 36,8 g | Xylol | 12,5 g | 80 °C | 16 h | 2 | 000 |
| 28 | 8 | 1 075,0 g | MAS | 87,7 g | Xylol | 29,0 g | 80 °C | 20 h | 3 | 600 |
| 29 | 8 | 1 075,0 g | MAS | 43,5 g | Xylol | 15,0 g | 80 °C | 18 h | 2 | 200 |
| 30 | 9 | 662,5 g | AS | 73,4 g | Xylol | 246,4 g | 80 °C | 20 h | 3 | 500 |
| 31 | 9 | 662,5 g | AS | 36,7 g | Xylol | 233,7 g | 80 °C | 16 h | 1 | 100 |

Beispiel 32

In 800 g TMD werden bei 60 bis 70 °C unter Rühren 1000 g flexibilisiertes Epoxidharz aus Beispiel 2 innerhalb 2 Stunden zugetropft. Die Nachreaktion beträgt 2 Stunden bei 80 °C. Der Härter weist eine Viskosität von 6200 mPa•s bei 25 °C auf. Die Ausbeute beträgt 100 %. Das berechnete Aminäquivalent beträgt 100 g/Äqui. Die Zusammenfassung der Daten findet sich in Tabelle 3, Punkt 32.

Beispiele 33 bis 37

Analog zu Beispiel 32 werden flexible Addukthärter hergestellt. Die näheren Angaben hierzu finden sich in Tabelle 3, 33 bis 37.

TABELLE 3

| flexible Addukthärter | | | | | | |
|---|---|---|---|---|---|---|
| Bsp. | Amin | Menge [g] | epoxidiertes Polysulfid (gem. Bsp.) | [g] | flexibler Härter Viskosität (25 °C) [mPa•s] | Amin Äquivalent [g/Äqui] |
| 32 | TMD | 800 | 2 | 1000 | 6200 | 100 |
| 33 | TMD | 800 | 1 | 812 | 7400 | 90 |
| 34 | SX | 680 | 3 | 1004 | 5200 | 94 |
| 35 | SX | 680 | 4 | 974 | 5800 | 92 |
| 36 | MPDA | 580 | 4 | 974 | 7200 | 86 |
| 37 | MDA | 1000 | 5 | 1708 | 5100 | 150 |

Beispiel 38 (Vergleichsbeispiel)

100 g Harz aus Beispiel 2 werden mit 20 g Härter gemäß Beispiel 32 homogen gemischt. Nach einer Aushärtung von 7 Tagen bei 23 °C beträgt die Zugfestigkeit 4,1 mPa bei einer Dehnung von 80 %. Diese Messungen wurden an 4 mm starken Platten bestimmt (DIN 53 455). Parallel dazu werden an diesen Platten Chemikalientests nach DIN 53 168 durchgeführt. Dabei werden hohe Beständigkeiten gegen Lösungen von Natriumhydroxid und Schwefelsäure sowie Dieseltreibstoff erzielt. Die Beständigkeiten gegenüber dem Eser-Ketongemisch und dem Alkoholgemisch ist für Praxisanwendungen unzureichend. Die Ergebnisse sind in Tabelle 4 Punkt 38 zusammengestellt.

Beispiel 39 (Vergleichsbeispiel)

Analog zu Beispiel 38 werden 100 g Harz aus Beispiel 2 mit 18 g eines handelsüblichen Härters (H 105) gemischt, gehärtet und getestet. Die Ergebnisse sind in Tabelle 4 Punkt 39 zusammengestellt.

## TABELLE 4
## Chemikalienbeständigkeit nach DIN 53 168

| | Epoxid-verbindung (gem. Bsp.) (je 100g) | Härter (gemäß Bsp./Menge) | | Zug-festigkeit [mPa] | Dehnung [%] | NaOH 20 % | | $H_2SO_4$ 20 % | | Diesel | | Ester-Keton-Gemisch | | Alkohol-Gemisch | |
|---|---|---|---|---|---|---|---|---|---|---|---|---|---|---|---|
| | | | | | | 7d | 14d | 7d | 14d | 7d | 14d | 7d | 14d | 7d | 14d |
| 38 | 2 | 23 | 20 g | 4,1 | 79,5 | 1 | 1 | 1 | 1 | 1 | 1 | 5 | 5 | 4 | 4 |
| 39 | 2 | H105 | 18 g | 4,1 | 87,4 | 1 | 1 | 1 | 1 | 1 | 1 | 5 | 5 | 4 | 4 |

### Erläuterung

1 = unbeschädigt
2 = schwache Verfärbung
3 = leicht gequollen
4 = leicht gequollen (zerstörbar)
5 = stark gequollen (zerstörbar)
6 = zerstört

**Ester-Keton-Gemsich**

50 Vol.-% MIBK
50 Vol.-% Ethylacetat

**Alkohol-Gemisch**

48 Vol.-% Methanol
48 Vol.-% Isopropanol
4 Vol.-% Wasser

Beispiel 40

Es werden 100 g eines Esters, entsprechend Beispiel 12, mit 3 g Interrox TBPB-HP-M1 und 1,5 g Beschleuniger CA12 gemsicht und zu Probekörpern entsprechend den folgenden Prüfungen weiterverarbeitet. Nach einer Aushärtung von 7 Tagen bei 23 °C wurde die Zugfestigkeit und Dehnung (nach DIN 53 455) sowie die Chemikalienbeständigkeit (nach DIN 53 168) bestimmt. Die Prüfergebnisse sind in Tabelle 5, Punkt 40 zusammengefaßt.

Beispiel 41 bis 47

Analog zu Beispiel 40 werden verschiedene Ester mit verschiedenen Härtern gemischt, gehärtet und getestet. Die Ergebnisse finden sich in Tabelle 5, Punkt 41 bis 47.

## TABELLE 5

## Chemikalienbeständigkeit nach DIN 53 168

| | Ester (gem. Bsp.) jew. 100g | Härter | Zugfestigkeit [mPa) | Dehnung [%] | NaOH 20 % | | $H_2SO_4$ 20 % | | Diesel | | Ester Keton-Gemisch | | Alkohol-Gemsich | |
|---|---|---|---|---|---|---|---|---|---|---|---|---|---|---|
| | | | | | 7d | 14d | 7d | 14d | 7d | 14d | 7d | 14d | 7d | 14d |
| 40 | 12 | 3 g | 47,7 | 11,3 | 2 | 3 | 1 | 1 | 1 | 1 | 5 | 5 | 3 | 3 |
| 41 | 14 | Interrox | 17,8 | 27,7 | 3 | 3 | 1 | 1 | 1 | 1 | 5 | 5 | 5 | 5 |
| 42 | 16 | TBPB-HA-M1 | 4,7 | 65,8 | 6 | 6 | 1 | 1 | 1 | 1 | 6 | 6 | 6 | 6 |
| 43 | 13 | | 57,3 | 8,9 | 1 | 3 | 1 | 1 | 1 | 1 | 3 | 4 | 3 | 3 |
| 44 | 15 | 1,5 g | 27,8 | 17,1 | 3 | 4 | 1 | 1 | 1 | 1 | 5 | 5 | 5 | 5 |
| 45 | 24 | Beschleu- | 25,7 | 10,0 | 2 | 3 | 1 | 1 | 1 | 1 | 4 | 5 | 3 | 3 |
| 46 | 25 | niger CA12 | 36,0 | 8,6 | 1 | 1 | 1 | 1 | 1 | 1 | 4 | 5 | 3 | 3 |
| 47 | 26 | Lucirin BDK 5 g * | ---- | ---- | 1 | 1 | 1 | 1 | 1 | 1 | 3 | 4 | 2 | 3 |

* Aushärtung durch UV-Bestrahlung
Erläuterungen wie bei Tabelle 4

## Patentansprüche

**1.** Ester epoxidierter Polysulfid-Oligomere oder -Polymere der allgemeinen Formeln

(I)

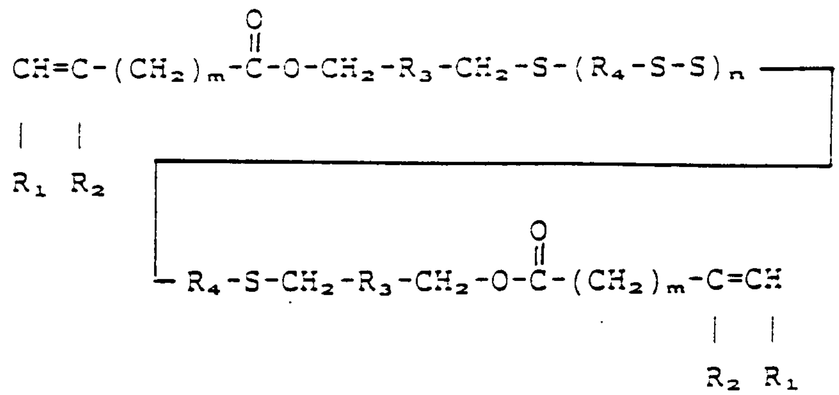

oder

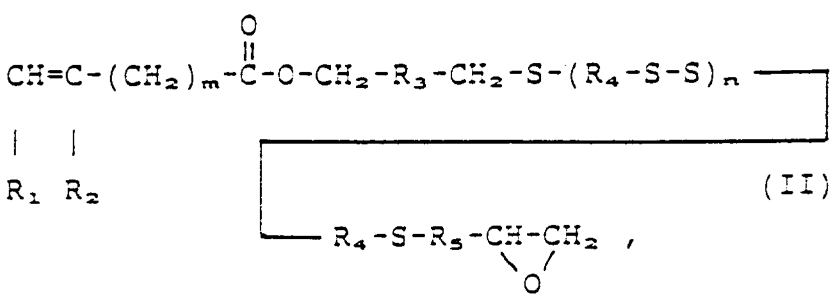

(II)

in denen

m = 0 oder 1

n = 3 bis 25

$R_1$ ein Furyl- oder Phenylrest oder Wasserstoff,

$R_2$ Wasserstoff oder eine Methylgruppe,

$R_3$ eine Gruppe gemäß der Formeln,

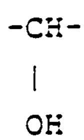

oder

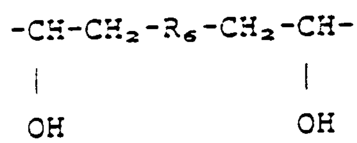

$R_4$ eine Gruppe gemäß der Formel

$-C_2H_4-O-CH_2-O-C_2H_4-$

$R_5$ eine Gruppe gemäß der Formeln

$-CH_2-$

oder

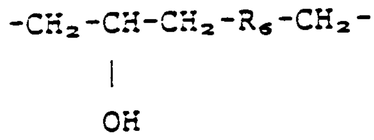

$R_6$ eine Gruppe gemäß der Formeln

$-O-(CH_2)_{2-12}-O-$ ,

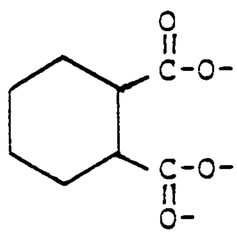 , 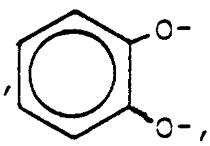 ,

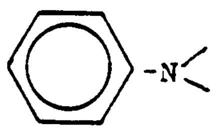 , $-O-(R_8-O-R_9-O)_o-R_8-O-$

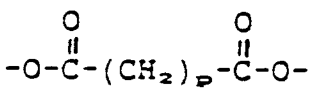

oder

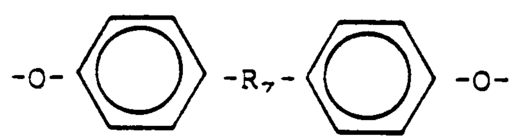

$R_7$ - $CH_2$-,

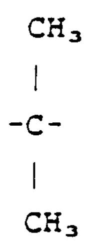 , 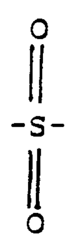 oder 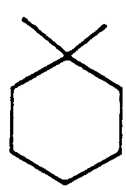

o = 1 bis 20
p = 1 bis 10
und $R_8$ und $R_9$ gleich oder verschieden sind und eine Ethylen- oder Propylen-Gruppe bedeuten.

**2.** Verfahren zur Herstellung der Ester entsprechend der allgemeinen Formel (I) des Anspruchs 1, **dadurch gekennzeichnet**, daß epoxidierte Polysulfide der allgemeinen Formel

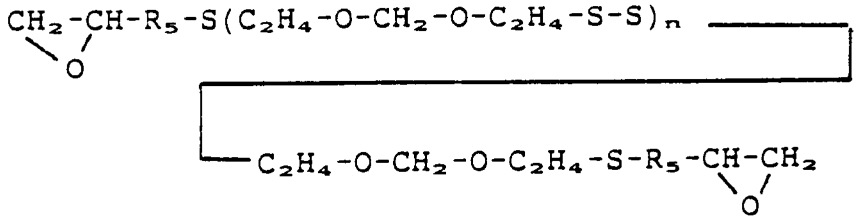

,

in der n = 5 bis 25
mit einer dem Epoxidäquivalent entsprechenden Menge einer ethylenisch ungesättigten Carbonsäure bei einer Temperatur im Bereich von 60 bis 90 °C umgesetzt werden.

3. Verfahren zur Herstellung der Ester entsprechend der allgemeinen Formel (II) des Anspruchs 1, **dadurch gekennzeichnet**, daß epoxidierte Polysulfide der allgemeinen Formel

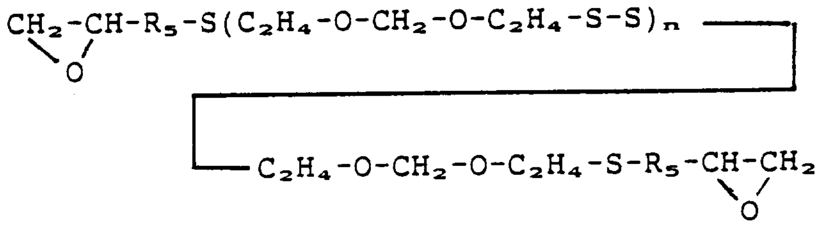

,

in der n = 5 bis 25
mit einer dem halben Epoxidäquivalent entsprechenden Menge einer ethylenisch ungesättigten Carbonsäure bei einer Temperatur im Bereich von 60 bis 90 °C umgesetzt werden.

4. Verwendung der Ester aus Anspruch 1 als Flexibilisierungsmittel von Epoxidharzen.

5. Verwendung der Ester aus Anspruch 1 zur Herstellung flexibler Beschichtungen alleine oder im Gemisch mit Epoxidharzen und/oder epoxidgruppenhaltigen Reaktivverdünnern.

6. Verwendung der Ester aus Anspruch 1 als Flexibilisierungsmittel für ethylenisch ungesättigte Harze.

7. Verwendung der Ester aus Anspruch 1 zur Herstellung flexibler Beschichtungen alleine oder im Gemisch mit ethylenisch ungesättigten Harzen.

8. Verwendung der Ester aus Anspruch 1 als Flexibilisierungsmittel für durch Strahlung vernetzbare Beschichtungsmittel.